# EUROPÄISCHE PATENTANMELDUNG

(11) **EP 2 602 454 A1**
(43) Veröffentlichungstag der Anmeldung: **12.06.2013**
(21) Anmeldenummer: 11191920.5
(22) Anmeldetag: 05.12.2011
(51) Int. Cl.: F02C 6/16, F03G 6/00, F03G 7/04, F17C 5/06, F17C 7/00

(54) **Wirtschaflicher Druckgasspeicher**

(71) Anmelder: Siemens Aktiengesellschaft, 80333 München (DE)
(72) Erfinder: Hein, Olaf, 45481 Mülheim an der Ruhr (DE); Kliemke, Hardy, 13351 Berlin (DE); Waruschewski, Andreas, 45357 Essen (DE)

(57) **Zusammenfassung**

Es wird ein Druckgasspeicher (10) mit einer Druckkammer (11), einem mit der Druckkammer (11) über eine erste Zuführung (13) verbundenen elektrisch betriebenen Gaskompressor (14), einer mit der Druckkammer (11) über einen ersten Auslass (15) verbundenen Druckgasturbine (16) und einer Steuereinheit (18) eingeführt. Die Druckkammer (11) ist ausgebildet, ein Druckgas (12) unter Druck zu speichern. Der Gaskompressor (14) ist ausgebildet, das Druckgas (12) unter Druck in die Druckkammer (11) zu leiten. Die Druckgasturbine (16) ist ausgebildet, von dem Druckgas (12) durchströmt zu werden und einen elektrischen Strom zu generieren. Erfindungsgemäß ist ein Druckausgleichsmittel vorgesehen, das ausgebildet ist, einen einstellbaren Außendruck auf eine Außenseite der Druckkammer (11) auszuüben. Dabei ist die Steuereinheit (18) ausgebildet, den Außendruck proportional zu einem in der Druckkammer (11) herrschenden Innendruck einzustellen.

## Beschreibung

Die in ein elektrisches Versorgernetz eingespeiste elektrische Leistung sollte möglichst jederzeit gleich der aus dem Versorgernetz entnommenen elektrischen Leistung sein. Da jedoch die Leistungsentnahme fortlaufend Schwankungen unterworfen ist, die sich nur bedingt vorhersehen lassen, bedeutet dies, dass die von den jeweiligen einspeisenden Kraftwerken bereitgestellte Leistung entsprechend gesteuert werden muss, um auf Änderungen der Leistungsentnahme reagieren zu können. Unterschiedliche Kraftwerkstypen können dabei aus technischen Gründen unterschiedlich schnell auf solche Lastschwankungen reagieren. So besitzen sogenannte Grundlastkraftwerke wie Kernkraftwerke oder Kohlenkraftwerke eine hohe Trägheit, während Gasturbinenkraftwerke schnell auf Änderungen der Situation reagieren können.

Eine Phase, in der eine besonders hohe Leistungsentnahme aus dem Versorgernetz vorliegt, bezeichnet man als Spitzenlastphase. Zu dieser Zeit sind die Preise am Strommarkt gewöhnlich besonders hoch. Steigt die Nachfrage nach elektrischer Leistung schneller, als die Stromproduktion reagieren kann, entsteht eine Strommangelphase. Wird jedoch plötzlich wieder weniger elektrische Leistung nachgefragt, kann es aufgrund der Trägheit mancher Kraftwerkstypen auch zu Stromüberschuss im Versorgernetz kommen. In diesem Fall spricht man von einer Stromüberschussphase, die zu fallenden und im Extremfall negativen Strompreisen führen kann.

Diese Situation wird dadurch verschärft, dass in manchen Ländern Strom aus regenerativen Energiequellen Vorrang gegenüber fossil und nuklear erzeugtem Strom eingeräumt wird, Strom aus regenerativen Quellen also trotz eines zu einem gegebenen Zeitpunkt eventuell schon durch andere Kraftwerkstypen gedeckten Leistungsbedarfs in das Netz eingespeist werden darf. Aufgrund der prinzipbedingten starken und unvorhersehbaren Schwankung der aus regenerativen Energiequellen eingespeisten Leistung kommt es so mit einem zunehmenden Ausbau der regenerativen Energiequellen immer häufiger zu Stromüberschussphasen.

Die Erfindung macht es sich daher zur Aufgabe, einen Energiespeicher einzuführen, der eine hohe Regelgeschwindigkeit besitzt und es so erlaubt, in Stromüberschussphasen elektrische Leistung aufzunehmen und in Strommangelphasen elektrische Leistung abzugeben.

Die Aufgabe wird durch einen Druckgasspeicher gemäß Anspruch 1 gelöst. Die Unteransprüche betreffen bevorzugte Ausführungsformen der Erfindung.

Der Druckgasspeicher besitzt eine Druckkammer, einen mit der Druckkammer über eine erste Zuführung verbundenen elektrisch betriebenen Gaskompressor, eine mit der Druckkammer über einen ersten Auslass verbundene Druckgasturbine, einen Flüssigkeitsspeicher und eine Steuereinheit. Die Druckkammer ist ausgebildet, ein Druckgas unter Druck zu speichern. Der Gaskompressor ist ausgebildet, das Druckgas unter Druck in die Druckkammer zu leiten. Die Druckgasturbine ist ausgebildet, von dem Druckgas durchströmt zu werden und einen elektrischen Strom zu generieren.

Erfindungsgemäß besitzt der Druckgasspeicher ein Druckausgleichsmittel, das ausgebildet ist, einen einstellbaren Außendruck auf eine Außenseite der Druckkammer auszuüben. Dabei ist die Steuereinheit ausgebildet, den Außendruck proportional zu einem in der Druckkammer herrschenden Innendruck einzustellen.

Die Erfindung bietet den Vorteil, dass in Stromüberschussphasen überschüssiger Strom abgenommen und in dem Gaskompressor des Druckgasspeichers verbraucht werden kann, wobei der Druckgasspeicher die von diesem überschüssigen Strom bereitgestellte Energie als Druck speichert. Der Druck kann zu einem späteren Zeitpunkt während einer Spitzenlastphase durch Auslassen von Druckgas durch die Druckgasturbine abgebaut werden, wodurch die im Druckgasspeicher gespeicherte Energie wieder in elektrische Form überführt wird und in das Versorgernetz eingespeist werden kann. Der Druckgasspeicher kann dabei innerhalb von kurzer Zeit auf Lastschwankungen im Verbrauchernetz reagieren, so dass er besonders vorteilhaft parallel zu einem Kraftwerk betrieben wird, das höhere Regelzeiten besitzt. Ein Beispiel hierfür wäre ein Gasturbinenkraftwerk.

Als Druckkammer wird erfindungsgemäß eine künstlich geschaffene Kaverne verwendet, da natürliche Kavernen schwierig zu lokalisieren und an einem gegebenen Ort unter Umständen nicht verfügbar sind. Als Druckgas wird bevorzugt Luft verwendet.

Die Druckkammer wird dabei bevorzugt unterirdisch angeordnet, so dass ein die Druckkammer umgebendes Erdreich eine Außenwandung der Druckkammer stützt. Diese Ausführungsform besitzt einerseits den Vorteil einer zusätzlichen Entlastung der Druckkammer wegen der Stützung durch das Erdreich, andererseits erfüllt das Erdreich auch eine Schutzfunktion für einen Unglücksfall, bei dem die Druckkammer bersten könnte. So kann das Erdreich äußere Einwirkungen von der Druckkammer abschirmen und im Extremfall Trümmerteile einer berstenden Druckkammer auffangen.

Bei einer Ausführungsform der Erfindung besitzt die Druckkammer eine Decke und weist auf einer Oberseite der Decke als Druckausgleichsmittel eine mit einem Flüssigkeitsspeicher verbundene Flüssigkeitssäule auf. Die Steuereinheit ist dabei ausgebildet, eine Höhe der Flüssigkeitssäule proportional zu einem in der Druckkammer herrschenden Druck einzustellen.

Die Flüssigkeitssäule ermöglicht es, die Decke der Druckkammer von dem in der Druckkammer herrschenden Druck zu entlasten. Je höher der Druck in der Druckkammer, desto höher wird die Steuereinheit die Flüssigkeitssäule einstellen.

Alternativ kann bei Ausführungsformen des erfindungsgemäßen Druckgasspeichers, bei dem die Druckkammer unterirdisch angeordnet ist, als Druckausgleichsmittel ein um die Druckkammer herum angeordneter flexibler Flüssigkeitsbehälter vorgesehen sein, der ausgebildet ist, eine Flüssigkeit unter Druck aufzunehmen und dadurch einen die Druckkammer wenigstens teilweise umgebenden und durch das Erdreich abgestützten Flüssigkeitsmantel zu erzeugen.

Diese Ausführungsform bietet den Vorteil, dass die Außenseite der Druckkammer auch dann zuverlässig druckentlastet werden kann, wenn das die Druckkammer umgebende Erdreich nachgibt. In einem solchen Fall wird der Druck in dem Flüssigkeitsbehälter sinken, was durch geeignete Maßnahmen bemerkt werden kann. Um den Druck in dem Flüssigkeitsbehälter wieder auf das erforderliche Maß zu steigern, kann dann weitere Flüssigkeit in den Flüssigkeitsbehälter eingeleitet oder der Flüssigkeitsbehälter durch ein Spannelement oder dergleichen wieder stärker komprimiert werden. Dadurch können die Verschiebung des nachgebenden Erdreichs ausgeglichen und der Außendruck wieder auf den gewünschten Wert gebracht werden.

Bei vorteilhaften Ausführungsformen der Erfindung ist die Decke der Druckkammer kuppelförmig und bezüglich ihrer Unterseite konkav ausgestaltet. Eine solche Formgebung verteilt den in der Druckkammer herrschenden Druck vorteilhaft über die Fläche der Druckkammer.

Die Druckkammer kann um eine Vertikalachse rotationssymmetrisch ausgestaltet sein. Bei einer kreisförmigen Querschnittsfläche durch die Druckkammer wirkt der in der Druckkammer herrschende Druck in jede Querrichtung gleich stark, so dass kein seitlicher Bereich der Druckkammer stärker belastet wird als die sonstigen.

Vorzugsweise weist die Druckkammer einen Stahlbetonmantel auf beziehungsweise ist aus Stahlbeton aufgebaut. Stahlbeton kann preisgünstig hergestellt werden und besitzt eine hohe Festigkeit.

Die Druckkammer kann jedoch auch eine entlang einer Vertikalachse komprimierbare Wandung aufweisen. Als Druckausgleichsmittel ist in diesem Fall wenigstens ein Spannelement vorgesehen, das mit einer Decke der Druckkammer und einer Bodenplatte der Druckkammer verbunden und ausgebildet ist, über die Decke und die Bodenplatte der Druckkammer den Außendruck entlang der Vertikalachse auszuüben. Indem das Spannelement unterschiedlich stark gespannt wird, kann so der Außendruck auf die Druckkammer eingestellt werden.

Bei allen Ausführungsformen der Erfindung ist die Steuereinheit vorzugsweise dazu ausgebildet, den Außendruck so einzustellen, dass er dem Innendruck entspricht. In diesem Fall wird eine optimale Druckentlastung der Druckkammer erreicht.

Die erste Zuführung und der erste Auslass sind bevorzugt durch die Decke der Druckkammer mit der Druckkammer verbunden. Gerade in Verbindung mit einer im Erdreich angeordneten Druckkammer bietet diese Variante den einfachsten Zugang für das Druckgas zu der Druckkammer.

Dabei sind die erste Zuführung und der erste Auslass besonders bevorzugt durch einen Scheitelpunkt oder Mittelpunkt der Decke der Druckkammer mit der Druckkammer verbunden. Auch hierdurch wird eine möglichst gute Verteilung des Drucks über die Struktur der Druckkammer beziehungsweise ihrer Decke erreicht.

Der Druckgasspeicher kann über eine mit der Druckkammer verbundene zweite Zuführung für ein Kompensationsmedium und eine mit der zweiten Zuführung verbundene Pumpe verfügen. Die Pumpe ist dabei ausgebildet, das Kompensationsmedium in die Druckkammer hinein und/oder aus der Druckkammer heraus zu pumpen. Das Kompensationsmedium bietet die Möglichkeit, das Volumen der Druckkammer zu verringern, so dass auch schon bei kleinen Mengen von komprimiertem Druckgas ein ausreichend großer Druck in der Druckkammer aufgebaut werden kann. Außerdem wird es möglich, das Kompensationsmedium oder einen Teil davon aus der Druckkammer herauszupumpen, wenn der Druck in der Druckkammer über einen bestimmten Schwellwert steigt.

Das Kompensationsmedium kann eine Flüssigkeit sein, die unter Druck nur eine geringe Volumenänderung besitzt. Besonders bevorzugt ist das Kompensationsmedium Wasser oder enthält zu einem überwiegenden Teil Wasser. Wasser kann praktisch kaum komprimiert werden und ist nahezu überall verfügbar. Gegenüber hydraulischen Ölen und anderen technisch geeigneten Flüssigkeiten besitzt Wasser zudem den Vorteil, dass keine Umweltbeeinträchtigung zu befürchten ist, sollte es zu einem unbeabsichtigten Austreten des Kompensationsmediums kommen.

Aus demselben Grund ist bevorzugt auch eine in dem Flüssigkeitsspeicher und der Flüssigkeitssäule enthaltene Flüssigkeit Wasser oder enthält zu einem überwiegenden Teil Wasser. Sind sowohl diese Flüssigkeit, als auch das Kompensationsmedium Wasser oder enthalten überwiegend Wasser, können beide aus dem Flüssigkeitsspeicher versorgt werden. Dabei kann die Pumpe deshalb dazu ausgebildet sein, das Kompensationsmedium aus dem Flüssigkeitsspeicher in die Druckkammer beziehungsweise aus der Druckkammer in den Flüssigkeitsspeicher zu pumpen.

Generell ist es im Rahmen der Erfindung möglich, eine Trink- oder Brauchwasserzuleitung als Flüssigkeitsspeicher zu verwenden. In einem solchen Fall kann das je nach Betriebssituation überschüssige Wasser, etwa bei Vermindern der Höhe der Flüssigkeitssäule oder bei Herauspumpen des Kompensationsmediums aus der Druckkammer als Abwasser entsorgt werden. Allerdings ist eine solche Betriebsweise mit erhöhten Kosten verbunden und daher nachteilig.

Alternativ kann das Kompensationsmedium auch ein Gas sein. Vorzugsweise wird dabei Kohlendioxid oder ein überwiegend aus Kohlendioxid bestehendes Gas verwendet. Die Druckkammer weist dabei eine verschiebbare Gasbarriere auf, die ausgebildet ist, die Druckkammer in einen ersten variablen Raum für das Druckgas und einen zweiten variablen Raum für das Kompensationsmedium zu unterteilen und dabei den ersten variablen Raum von dem zweiten variablen Raum gasdicht abzutrennen. Ohne die Gasbarriere würden sich die Gase miteinander mischen, so dass im Ergebnis die erste und die zweite Zuführung demselben Zweck dienen würden, nämlich durch Zuleiten von Gasen einen Druck in der Druckkammer aufzubauen. Die Gasbarriere ist verschiebbar, damit eine Volumenanpassung möglich ist. Der Druckausgleich zwischen dem ersten und dem zweiten variablen Raum findet dabei automatisch statt, da eine Druckdifferenz zwischen den beiden variablen Räumen eine entsprechende Kraft auf die Gasbarriere ausüben und diese verschieben würde.

Wird als Kompensationsmedium Kohlendioxid oder ein kohlendioxidhaltiges Gas benutzt, kann im Fall des Entnehmens des Kompensationsmediums (beispielsweise wenn eine größere Menge Druckgas in der Druckkammer gespeichert werden soll) das Gas in ein Kohlendioxidnetz zu einem Verbraucher wie eine Methan- oder Methanolsyntheseanlage geleitet werden. Wird hingegen Druckgas aus der Druckkammer ausgelassen, um Strom zu erzeugen, kann Kohlendioxid oder kohlendioxidhaltiges Gas von einem separaten Speicher oder einer Desorptionskolonne in die Druckkammer gelangen. Auf diese Weise kann der Druckgasspeicher zusätzlich als Kohlendioxidspeicher verwendet werden. Der erfindungsgemäße Druckgasspeicher wird bevorzugt zum vorübergehenden Speichern von Energie verwendet, wobei in einer Stromüberschussphase zur Aufnahme elektrischer Leistung Druckgas von dem Gaskompressor in die Druckkammer geleitet und in einer Strommangelphase zur Bereitstellung von elektrischer Leistung Druckgas aus der Druckkammer durch die Druckgasturbine ausgelassen wird.

Die Erfindung wird nachfolgend anhand von Abbildungen von bevorzugten Ausführungsbeispielen näher erläutert. Gleiche Bezugszeichen bezeichnen dabei gleiche oder gleichartige Elemente, wobei wiederholte Beschreibungen aus Gründen der Klarheit möglichst vermieden werden. Es zeigen:
Fig. 1 ein erstes Ausführungsbeispiel eines Druckgasspeichers, in dem Wasser als Kompensationsmedium verwendet wird;
Fig. 2 ein zweites Ausführungsbeispiel eines Druckgasspeichers, in dem ein Gas als Kompensationsmedium verwendet wird;
Fig. 3 die Druckkammer eines dritten Ausführungsbeispiels mit einem Flüssigkeitsmantel; und
Fig. 4 die Druckkammer eines vierten Ausführungsbeispiels mit einer komprimierbaren Wandung.

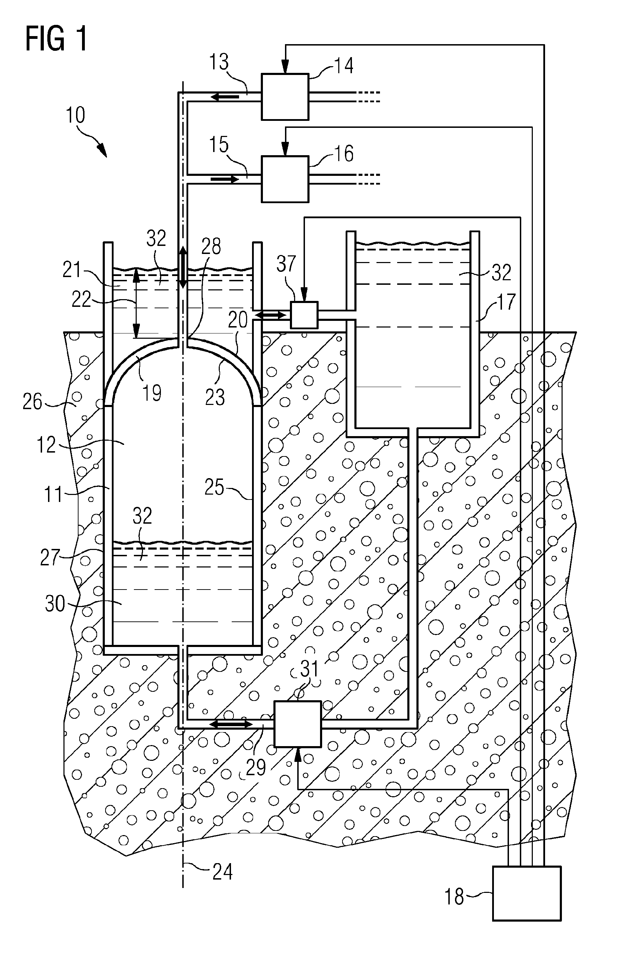

Fig. 1 zeigt ein erstes Ausführungsbeispiel eines erfindungsgemäßen Druckgasspeichers 10, in dem Wasser als Kompensationsmedium verwendet wird. Der Druckgasspeicher 10 besitzt als zentrale Komponente eine Druckkammer 11, in welchem ein Druckgas 12 gespeichert wird. Sinn des Speicherns des Druckgases 12 ist, den Druck, unter dem das Druckgas 12 gespeichert ist, zu einem späteren Zeitpunkt wieder in elektrische Energie zu wandeln. Aus diesem Grund kann ein beliebiges Gas als Druckgas 12 verwendet werden, wobei inerte Gase sicherheitsspezifische Vorteile bieten. Es könnten daher Abgase einer Verbrennungsanlage verwendet werden, die keinen oder nur einen geringen Gehalt an Sauerstoff aufweisen. Es ist aber genauso möglich, die Umgebungsluft zu verwenden, was den Vorteil einer praktisch unbegrenzten Verfügbarkeit von Druckgas 12 besitzt.

Das Druckgas 12 wird im Betrieb von einem Gaskompressor 14 über eine erste Zuführung 13 in die Druckkammer 11 eingebracht. Der Gaskompressor 14 wird elektrisch betrieben, so dass bei Aufbauen eines Druckes in der Druckkammer 11 elektrische Energie aufgenommen wird. Soll hingegen elektrische Energie abgegeben werden, wird das Druckgas 12 ganz oder teilweise aus der Druckkammer 11 abgelassen, wobei es über einen ersten Auslass 15 durch eine Druckgasturbine 16 geleitet wird. Die erste Zuführung 13 und der erste Auslass 15 können dabei ganz oder teilweise einteilig ausgeführt sein. Auch sind Implementationsformen der Erfindung vorstellbar, bei denen eine einzelne Komponente die Funktion sowohl des Gaskompressors 14 als auch der Druckgasturbine 16 übernimmt. Dies kann beispielsweise dadurch erreicht werden, dass die einzelne Komponente beim Leiten des Druckgases 12 in die Druckkammer 11 im Motorbetrieb und beim Auslassen des Druckgases 12 aus der Druckkammer 11 im Generatorbetrieb betrieben wird.

Auf einer Decke 19 der Druckkammer 11, welche beim in Fig. 1 gezeigten Ausführungsbeispiel kuppelförmig und bezüglich ihrer Unterseite 23 konkav, vorzugsweise halbkugel- oder kugelsegmentförmig, ausgebildet ist, ist hier als Druckausgleichsmittel eine Flüssigkeitssäule 21 vorgesehen, deren Höhe 22 variabel und so bemessen ist, dass die Decke 19 der Druckkammer 11 durch die Krafteinwirkung der Flüssigkeitssäule 21 gegenüber dem in der Druckkammer 11 herrschenden Druck druckentlastet ist. In dem in Fig. 1 gezeigten Ausführungsbeispiel wird Wasser 32 als Flüssigkeit verwendet, weil Wasser als Trink- oder Brauchwasser gewöhnlich leicht verfügbar ist und in einem Havariefall ohne negative Auswirkungen auf die Umwelt bleibt. Um einen Betrieb auch bei geringen Außentemperaturen zu gewährleisten kann das Wasser 32 mit einem Frostschutzmittel versetzt werden. Alternativ ist es auch möglich, das Wasser 32 zu beheizen, wofür besonders vorteilhaft Abwärme einer Verbrennungsanlage, beispielsweise eines Kraftwerkes, verwendet wird.

Die erste Zuführung 13 und der erste Auslass 15 sind durch einen Scheitelpunkt 28, der im gezeigten Beispiel auch den Mittelpunkt der Decke 19 darstellt, durch die Decke 19 der Druckkammer 11 mit dem Inneren der Druckkammer 11 verbunden.

Die Druckkammer 11 weist eine um eine Vertikalachse 24 rotationssymmetrische, hier zylindrische Wandung 27, auf, welche vorzugsweise als Stahlbetonmantel 25 ausgeführt ist. Die Druckkammer 11 ist vorzugsweise wenigstens zum überwiegenden Teil in Erdreich 26 eingebettet, das eine zusätzliche Stabilisierung der Druckkammer 11 und insbesondere ihrer Außenwandung 27 bewirkt.

Die Flüssigkeitssäule 21 wird aus einem Flüssigkeitsspeicher 17 gespeist, aus dem Wasser 32 von einer Flüssigkeitspumpe 37 zwischen dem Flüssigkeitsspeicher 17 und der Flüssigkeitssäule 21 bewegt werden kann. Der Flüssigkeitsspeicher 17 kann ebenfalls in das Erdreich 26 eingelassen oder aber oberirdisch angeordnet sein. Generell kann der Flüssigkeitsspeicher 17 oberhalb der Flüssigkeitssäule 21 angeordnet sein, wodurch auch bei Ausfallen der Flüssigkeitspumpe 37 sichergestellt ist, dass Flüssigkeit von dem Flüssigkeitsspeicher 17 zur Druckentlastung in die Flüssigkeitssäule 21 gelangen kann. Dies ist vorteilhaft, weil die Gefahr einer Beschädigung der Druckkammer erwartungsgemäß größer ist, wenn eine unzulängliche Druckentlastung der Decke 19 der Druckkammer 11 vorgenommen wird, als es bei einer Überkompensation des Druckes in der Druckkammer 11 der Fall wäre.

Um auch bei nur teilweisem Befüllen der Druckkammer 11 mit Druckgas 12 einen für den Betrieb der Druckgasturbine 16 ausreichenden Druck bereitstellen zu können, kann das Volumen der Druckkammer 11 durch Befüllen mit einem Kompensationsmedium 30 verringert werden. Im vorliegenden Fall wird hierfür eine Flüssigkeit verwendet, die den Vorteil einer geringen Komprimierbarkeit besitzt. Dabei kann ebenfalls Wasser 32 als Kompensationsmedium 30 verwendet werden. Wird für das Kompensationsmedium 30 dieselbe Flüssigkeit verwendet wie für die Flüssigkeitssäule 21 (beispielsweise Wasser), kann das Kompensationsmedium 30 ebenfalls aus dem Flüssigkeitsspeicher 17 gespeist werden.

Um das Kompensationsmedium 30 in die Druckkammer 11 zu pumpen, ist eine mit der Druckkammer 11 über eine zweite Zuführung 29 verbundene Pumpe 31 vorgesehen, die im gezeigten Beispiel bidirektional betreibbar ausgeführt ist, so dass das Kompensationsmedium 30 von einer einzigen Pumpe 31 in die Druckkammer 11 hinein und aus der Druckkammer heraus gepumpt werden kann.

Die Kompensation des Volumens der Druckkammer 11 des Ausführungsbeispiels kann auch mit anderen der gezeigten Ausführungsbeispiele verwendet werden.

Der Druckgasspeicher 10 der Erfindung umfasst ferner eine Steuereinheit 18, welche mit dem Gaskompressor 14, der Druckgasturbine 16, der Flüssigkeitspumpe 37 und der Pumpe 31 verbunden ist und diese steuert. Erfindungsgemäß wird dabei in Stromüberschussphasen zum Verbrauch überschüssigen elektrischen Stromes Druckgas 12 in die Druckkammer 11 unter Druck eingebracht und in Strommangelphasen zum Bereitstellen (gegebenenfalls zusätzlicher) elektrischer Leistung wieder aus der Druckkammer 11 abgelassen.

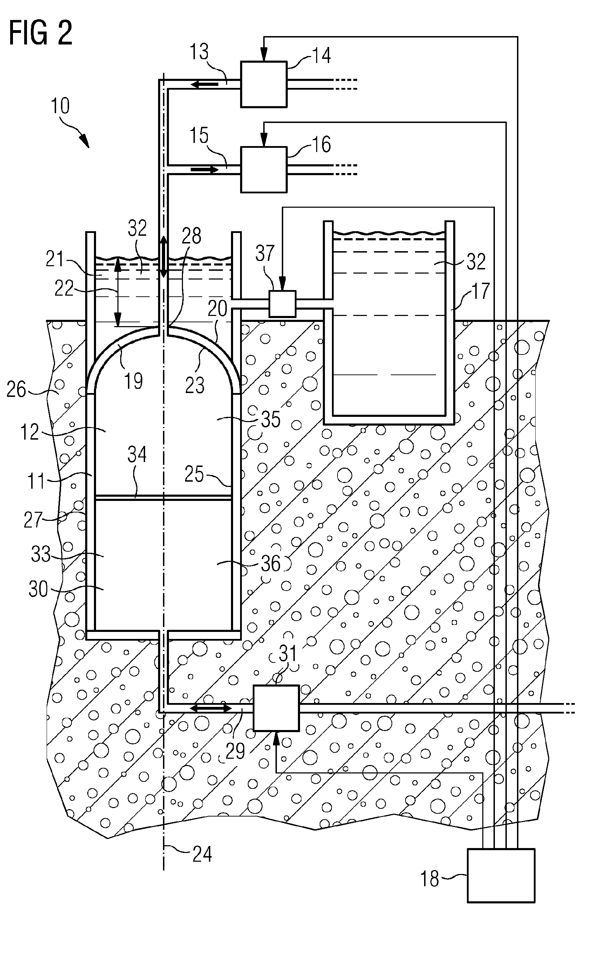

Fig. 2 zeigt ein zweites Ausführungsbeispiel eines erfindungsgemäßen Druckgasspeichers 10, in dem ein Gas als Kompensationsmedium 30 verwendet wird. Der Aufbau des zweiten Ausführungsbeispiels entspricht im Wesentlichen dem des ersten, weshalb hier nur auf die Unterschiede eingegangen werden soll.

In der Druckkammer 11 ist eine Gasbarriere 34 vorgesehen, die die Druckkammer 11 in zwei variable Räume 35 und 36 unterteilt. Dabei ist der erste variable Raum 35 zum Speichern des Druckgases 12 und der zweite variable Raum 36 für das Kompensationsmedium 30 vorgesehen, welches vorzugsweise Kohlendioxid oder ein kohlendioxidhaltiges Gas ist. Die Gasbarriere 34 ist verschiebbar und gleicht auf diese Weise einen Druckunterschied zwischen dem Druckgas 12 und dem Kompensationsmedium 30 automatisch aus. Die Gasbarriere 34 verhindert, dass sich das Druckgas 12 und das Kompensationsmedium 30 vermischen.

Wird Kohlendioxid als Kompensationsmedium 30 eingesetzt, kann bei der Entnahme des Kompensationsmediums 30 das Kohlendioxid in ein Kohlendioxidnetz oder zu einem Verbraucher wie einer Methan- oder Methanolsyntheseanlage geleitet werden. Wird hingegen das Druckgas 12 zur Erzeugung von elektrischem Strom entnommen, kann zusätzliches Kohlendioxid als Kompensationsmedium 30 aus einem separaten Speicher oder einer Desorptionskolonne in den zweiten variablen Raum 36 der Druckkammer 11 eingebracht werden. Auf diese Weise kann der Druckgasspeicher 10 des zweiten Ausführungsbeispiels auch zusätzlich als Kohlendioxidspeicher genutzt werden. Hierzu ist eine Kombination des ersten und des zweiten Ausführungsbeispiels vorteilhaft, bei der die von der Gasbarriere 34 getrennten variablen Räume vorgesehen sind und zusätzlich wie bei dem ersten Ausführungsbeispiel eine Flüssigkeit, beispielsweise Wasser, als weiteres Kompensationsmedium verwendet wird. Dadurch wird es möglich, die Größen von erstem und zweitem variablen Raum 35, 36 unabhängig von einem maximalen Fassungsvolumen der Druckkammer 11 anzupassen. Durch Einleiten des flüssigen Kompensationsmediums in die Druckkammer wird das verbleibende Volumen der Druckkammer 11 verringert beziehungsweise eingestellt und dann durch Einleiten von Druckgas und dem gasförmigen Kompensationsmedium in den ersten und den zweiten variablen Raum 35, 36 aufgeteilt.

Generell kann die Druckkammer mit einer Ableitung für Kondensationswasser versehen sein. Dies ist insbesondere bei der Verwendung von Kohlendioxid oder kohlendioxidhaltigem Gas als Kompensationsmedium oder als Druckgas sinnvoll, da Kohlendioxid üblicherweise auch Wasserdampf transportiert, der in der Druckkammer 11 kondensieren kann.

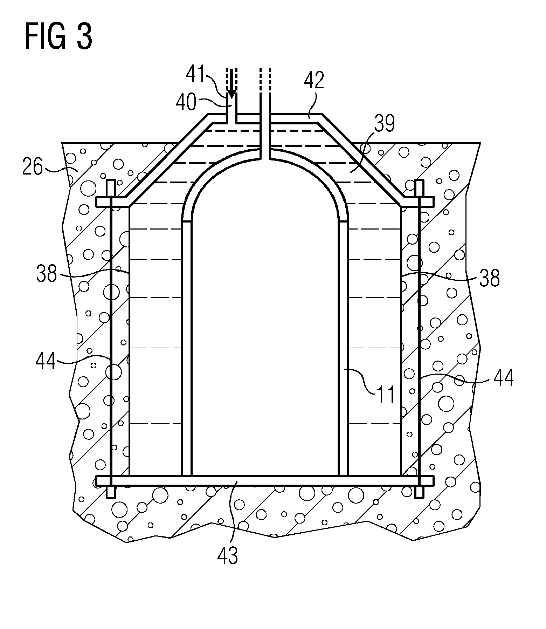

Fig. 3 zeigt die Druckkammer eines dritten Ausführungsbeispiels mit einem Flüssigkeitsmantel. Die Druckkammer 11 kann im Wesentlichen wie bei den anderen Ausführungsbeispielen aufgebaut sein, ist jedoch mit einem Flüssigkeitsmantel 39 umgeben, der zur Druckentlastung der Druckkammer 11 beiträgt. Der Flüssigkeitsmantel 39 wird durch einen flexiblen Flüssigkeitsbehälter 38 gebildet, der durch das Erdreich 26 gestützt und nach unten durch eine Bodenplatte 43 abgeschlossen wird. Der Flüssigkeitsbehälter 38 verfügt außerdem über eine Abschlusskappe 42, durch welche eine dritte Zuführung eine Flüssigkeit 40 in den Flüssigkeitsbehälter 38 einleiten kann. Gibt nun im Betrieb das umgebende Erdreich 26 nach, kann der Druck in dem Flüssigkeitsbehälter 38 durch Einleiten von zusätzlicher Flüssigkeit 40 wieder erhöht werden, wodurch sich der Flüssigkeitsbehälter 38 in gewissen Grenzen ausdehnt und wieder fest auf dem verschobenen Erdreich 26 aufliegt. Optional können Drahtseile 44 vorgesehen sein, die die Abschlusskappe 42 mit der Bodenplatte 43 verbinden und zum Druckaufbau in dem Flüssigkeitsmantel 39 beitragen können. Als Flüssigkeit 40 wird vorzugsweise Wasser verwendet.

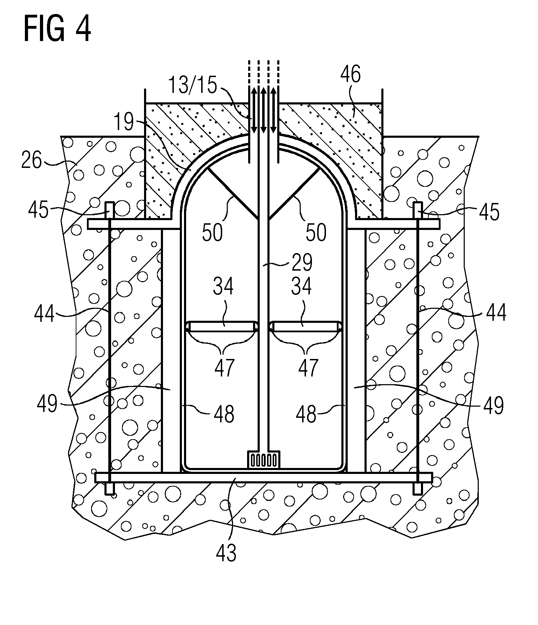

Fig. 4 zeigt die Druckkammer eines vierten Ausführungsbeispiels mit einer komprimierbaren Wandung. Die Druckkammer des vierten Ausführungsbeispiels besitzt eine Gasbarriere 34, die die Druckkammer in einen ersten und einen zweiten variablen Raum unterteilt, wie es bereits bei Fig. 2 gezeigt und erläutert wurde. Die Gasbarriere 34 ist bei diesem Beispiel mit

Dichtelementen 47 ausgestattet, die die Gasdichtheit der Gasbarriere 34 verbessern. Selbstredend können derartige Dichtelemente 47 auch bei dem Ausführungsbeispiel der Fig. 2 zur Anwendung kommen oder vorliegend entfallen, wenn eine gute Isolation der beiden variablen Räume voneinander weniger wichtig ist.

Als Besonderheit sind bei dem Ausführungsbeispiel der Fig. 4 die erste und die zweite Zuführung 13, 29 als ineinander angeordnete Rohre ausgeführt. Dieses Merkmal dieser Ausführungsform kann auch bei anderen Ausführungsformen, die eine Gasbarriere 34 besitzen, isoliert von den weiteren besonderen Merkmalen dieses Ausführungsbeispiels zum Einsatz kommen.

Die zweite Zuführung kann dabei mit der Bodenplatte 43 fest verbunden sein und so zur Stabilität der Druckkammer 11 beitragen. Auch kann sie als Stützelement dienen, an dem Verstrebungen 50 (beispielsweise Drahtseile) verankert werden. Im gezeigten Beispiel sind solche Verstrebungen 50 zwischen der zweiten Zuführung 29 und der Decke der Druckkammer vorgesehen.

Um die Druckkammer nach oben abzusichern und zu stabilisieren, kann auf der Decke der Druckkammer eine Betonschicht 46 vorgesehen sein.

Im Unterschied zu den anderen gezeigten Ausführungsbeispielen besitzt die Druckkammer der Fig. 4 eine komprimierbare Wandung 49, die im gezeigten Beispiel durch Erdreich 26 gestützt wird und beispielsweise aus Gummi gefertigt sein kann. Die komprimierbare Wandung 49 kann durch Ausüben einer entsprechenden Kraft in vertikaler Richtung zur Anpassung des Außendrucks auf die Druckkammer dienen. Hierzu können Spannelemente vorgesehen sein, die in Fig. 4 beispielhaft als Drahtseile 44, die die Decke und die Bodenplatte 43 der Druckkammer miteinander verbinden, ausgeführt sind. Die Spannung der Drahtseile 44 kann dabei durch Zugvorrichtungen 45 nach Bedarf angepasst werden. Damit die Drahtseile 44 auch im Erdreich 26 operabel bleiben, können Leerrohre um die Drahtseile 44 gelegt werden (nicht gezeigt).

Das Innere der Druckkammer ist dabei zur besseren Abdichtung vorzugsweise mit einer Folie 48 ausgekleidet. Am Übergang zwischen der beispielsweise aus Stahl ausgeführten Decke und der komprimierbaren Wandung 49 können zur Stabilisierung und Abdichtung Metallzungen vorgesehen sein (nicht gezeigt).

Obwohl die Erfindung im Detail durch bevorzugte Ausführungsbeispiele näher illustriert und beschrieben wurde, ist die Erfindung nicht durch die offenbarten Beispiele eingeschränkt. Andere Variationen können vom Fachmann hieraus abgeleitet werden, ohne den von den Ansprüchen definierten Schutzumfang der Erfindung zu verlassen.

## Patentansprüche

1. Ein Druckgasspeicher (10) mit einer Druckkammer (11), die ausgebildet ist, ein Druckgas (12) unter Druck zu speichern, einem mit der Druckkammer (11) über eine erste Zuführung (13) verbundenen elektrisch betriebenen Gaskompressor (14), der ausgebildet ist, das Druckgas (12) unter Druck in die Druckkammer (11) zu leiten, einer mit der Druckkammer (11) über einen ersten Auslass (15) verbundenen Druckgasturbine (16), die ausgebildet ist, von dem Druckgas (12) durchströmt zu werden und einen elektrischen Strom zu generieren, und einer Steuereinheit (18), **gekennzeichnet durch** ein Druckausgleichsmittel, das ausgebildet ist, einen einstellbaren Außendruck auf eine Außenseite der Druckkammer (11) auszuüben, wobei die Steuereinheit (18) ausgebildet ist, den Außendruck proportional zu einem in der Druckkammer (11) herrschenden Innendruck einzustellen.

2. Der Druckgasspeicher (10) des vorhergehenden Anspruchs, bei dem die Druckkammer (11) unterirdisch angeordnet ist, so dass ein die Druckkammer (11) umgebendes Erdreich (26) eine Außenwandung (27) der Druckkammer (11) stützt.

3. Der Druckgasspeicher (10) eines der beiden vorhergehenden Ansprüche, bei dem die Druckkammer (11) eine Decke (19) und auf einer Oberseite (20) der Decke (19) als Druckausgleichsmittel eine mit einem Flüssigkeitsspeicher (17) verbundene Flüssigkeitssäule (21) aufweist und die Steuereinheit (18) ausgebildet ist, eine Höhe (22) der Flüssigkeitssäule (21) proportional zu dem Innendruck einzustellen.

4. Der Druckgasspeicher (10) von Anspruch 2, mit einem um die Druckkammer (11) herum angeordneten flexiblen Flüssigkeitsbehälter (38), wobei der Flüssigkeitsbehälter (38) als Druckausgleichsmittel ausgebildet ist, eine Flüssigkeit (40) unter Druck aufzunehmen und dadurch einen die Druckkammer (11) wenigstens teilweise umgebenden und durch das Erdreich (26) abgestützten Flüssigkeitsmantel (39) zu erzeugen.

5. Der Druckgasspeicher (10) von einem der vorhergehenden Ansprüche, bei dem die Druckkammer (11) einen Stahlbetonmantel (25) aufweist.

6. Der Druckgasspeicher (10) von einem der Ansprüche 1 oder 2, bei dem die Druckkammer (11) eine entlang einer Vertikalachse (24) komprimierbare Wandung (49) und als Druckausgleichsmittel wenigstens ein Spannelement (44, 45) aufweist, das mit einer Decke (19) der Druckkammer (11) und einer Bodenplatte (43) der Druckkammer (11) verbunden und ausgebildet ist, über die Decke (19) und die Bodenplatte (43) der Druckkammer (11) den Außendruck entlang der Vertikalachse (24) auszuüben.

7. Der Druckgasspeicher (10) von einem der vorhergehenden Ansprüche, bei dem die Steuereinheit (18) ausgebildet ist, den Außendruck so einzustellen, dass er dem Innendruck entspricht.

8. Der Druckgasspeicher (10) von einem der vorhergehenden Ansprüche, mit einer mit der Druckkammer (10) verbundenen zweiten Zuführung (29) für ein Kompensationsmedium (30) und einer mit der zweiten Zuführung (29) verbundenen Pumpe (31), welche ausgebildet ist, das Kompensationsmedium (30) in die Druckkammer (11) hinein und/oder aus der Druckkammer (11) heraus zu pumpen.

9. Der Druckgasspeicher (10) des vorhergehenden Anspruchs, bei dem das Kompensationsmedium (30) Wasser (32) ist oder zu einem überwiegenden Teil Wasser (32) enthält.

10. Der Druckgasspeicher (10) von Anspruch 8, bei dem das Kompensationsmedium (30) ein Gas (33), vorzugsweise Kohlendioxid oder ein überwiegend aus Kohlendioxid bestehendes Gas, ist und bei dem die Druckkammer (11) eine verschiebbare Gasbarriere (34) aufweist, die ausgebildet ist, die Druckkammer (11) in einen ersten variablen Raum (35) für das Druckgas und einen zweiten variablen Raum (36) für das Kompensationsmedium (30) zu unterteilen und dabei den ersten variablen Raum (35) von dem zweiten variablen Raum (36) gasdicht abzutrennen.

11. Verwendung eines Druckgasspeichers (10) gemäß einem der vorhergehenden Ansprüche, wobei in einer Stromüberschussphase zur Aufnahme elektrischer Leistung Druckgas (12) von dem Gaskompressor (14) in die Druckkammer (11) geleitet und in einer Strommangelphase zur Bereitstellung von elektrischer Leistung Druckgas (12) aus der Druckkammer (11) durch die Druckgasturbine (16) ausgelassen wird.
